# EUROPÄISCHE PATENTSCHRIFT

(11) **EP 0 531 277 B1**
(45) Veröffentlichungstag und Bekanntmachung des Hinweises auf die Patenterteilung: **18.12.1996**
(21) Anmeldenummer: 92890178.4
(22) Anmeldetag: 03.08.1992
(51) Int. Cl.: F02B 37/00, F02D 21/08

(54) **Brennkraftmaschine mit einem Einlass und einem Auslasssystem, einem Abgasturbolader sowie einem Druckspeicher**
Internal combustion engine having an inlet and outlet system, a turbocharger and a pressure accumulator
Moteur à combustion interne comprenant un système d'admission et d'échappement, un turbocompresseur et un accumutateur de pression

(30) Priorität: 02.09.1991 AT 1729/91
(43) Veröffentlichungstag der Anmeldung: 10.03.1993
(73) Patentinhaber: AVL Gesellschaft für Verbrennungskraftmaschinen und Messtechnik mbH.Prof.Dr.Dr.h.c. Hans List, A-8020 Graz (AT)
(72) Erfinder: Landfahrer, Klaus, Dr., A-8020 Graz (AT)
(74) Vertreter: Krause, Walter, Dr. Dipl.-Ing.

(56) Entgegenhaltungen:
- EP-A- 0 385 189
- DE-A- 1 526 442
- DE-A- 3 146 654
- DE-A- 3 237 337
- FR-A- 595 814
- GB-A- 451 092
- US-A- 4 249 382
- US-A- 4 291 535
- PATENT ABSTRACTS OF JAPAN vol. 7, no. 221 (M-246)(1366) 30. September 1983

## Beschreibung

Die Erfindung betrifft eine Brennkraftmaschine mit einem Einlaß- und einem Auslaßsystem, einem Abgasturbolader, der aus einem Verdichter und einer Abgasturbine besteht, sowie einem Druckspeicher, wobei die vom Verdichter komprimierte Ansaugluft über eine erste Leitung in einen Einlaßsammler gelangt und das Abgas aus einem Abgassammler über eine zweite Leitung zur Abgasturbine geleitet wird und wobei im Abbgasstrang eine Stauklappe vorgesehen ist, stromaufwärts von welcher eine Abzweigung einer mit einem Ventil versehenen Anschlußleitung zum Druckspeicher angeordnet ist.

Es ist seit langer Zeit bekannt, daß aufgeladene Brennkraftmaschinen ein problematisches Instationärverhalten aufweisen. Beim Hochfahren baut der Abgasturbolader den Druck im Einlaßsystem nur langsam auf, sodaß das als "Turboloch" bekannte Phänomen auftritt.

Bei einer aus der EP-A-0 385 189 bekannten Brennkraftmaschine ist daher ein Druckspeicher vorgesehen, aus dem während des Hochfahrens Druckluft entnommen und in das Einlaßsystem eingebracht werden kann. Dieser Druckspeicher wird durch einen Kompressor aufgeladen. Ein solches System ist nicht nur aufwendig, sondern auch energetisch ungünstig, da der Kompressor getrennt angetrieben werden muß.

Aus der FR-A-595 814 ist es bekannt, in einer Abgasrückführleitung zwischen Abgasstrang und Ansaugstrang zur Verbesserung der Verbrennung einen Druckspeicher anzuordnen. Die Abgasrückführleitung zweigt stromaufwärts einer in der Abgasleitung angeordneten Leiteinrichtung vom Abgasstrang ab und weist vor dem Druckspeicher ein Rückschlagventil und in Strömungsrichtung gesehen nach dem Druckspeicher ein gesteuertes Ventil auf. Mangels eines Abgasturboladers tritt hier allerdings die angesprochene Problematik des "Turbolochs" nicht auf.

Aus der DE-A-1 526 442, die den nächstkommenden Stand der Technik bildet, ist eine Brennkraftmaschine der eingangs genannten Art bekannt, wobei der Druckspeicher durch einen nur eingangsseitig versperrbaren Zyklon in der Verbindungsleitung zwischen der Abgasleitung und Ladeluftleitung gebildet ist. Der Zyklon dient zur mechanischen Rußabscheidung der der Ladeluft zugeführten Abgase. Mangels ausgangsseitigen Absperrmaßnahmen des Zyklons ist mit dieser bekannten Anordnung keine Verbesserung des Instationärverhaltens zu erzielen.

Aufgabe der Erfindung ist es, die bei einer Brennkraftmaschine der eingangs genannten Art auftretenden Nachteile zu vermeiden und die Aufladung des zur Verbesserung des Instationärverhaltens vorgesehenen Druckspeichers auf einfache und energetisch günstige Art zu lösen.

Erfindungsgemäß wird vorgeschlagen, daß der Druckspeicher über ein erstes steuerbares Ventil mit dem Einlaßsammler des Einlaßsystems in Verbindung steht und daß der Druckspeicher zusätzlich über ein zweites steuerbares Ventil mit dem Auslaßsammler des Auslaßsystems in Verbindung steht.

In einer äußerst vorteilhaften Ausführungsvariante der Erfindung ist vorgesehen, daß das Ventil in der Anschlußleitung als erstes Rückschlagventil ausgeführt ist. Durch das Schließen der Stauklappe wird der Druck im Abgassystem erhöht, sodaß das erste Rückschlagventil öffnet und der Speicher aufgeladen wird. Durch eine geeignete Steuerung wird die Stauklappe während der Verzögerungsphasen geschlossen. Da moderne Motoren, und zwar sowohl Dieselmotoren als auch Ottomotoren, über eine Schubabschaltung verfügen, bei der im Schiebebetrieb die Kraftstoffzufuhr zum Motor unterbunden wird, besteht das Abgas während dieser Betriebsphasen praktisch aus reiner Luft. Es kann daher sehr gut für die Aufladung während der nachfolgenden Beschleunigungsphasen herangezogen werden.

Anstelle des ersten Rückschlagventils in der Anschlußleitung zum Druckspeicher kann auch erfindungsgemäß ein aktiv gesteuertes Ventil vorgesehen sein. Die Aufladung der Brennkraftmaschine erfolgt dann über die Anschlußleitung zum Druckspeicher, deren Abzweigung vor der Abgasturbine des Turboladers liegt.

Um in extremen Betriebssituationen das Rückströmen von Ladeluft in den Verdichter zu verhindern, kann ein zweites Rückschlagventil zwischen dem Verdichter des Abgasturboladers und dem Einlaßsammler vorgesehen sein.

Besonders günstig ist es, wenn dieses zweite Rückschlagventil zwischen Ladeluftkühler und Einlaßsammler vorgesehen ist, wodurch eine übermäßige Beanspruchung des Ladeluftkühlers vermieden werden kann.

Das beste Regelverhalten wird erreicht, wenn die Stauklappe nach der Abgasturbine angeordnet ist und wenn die Abzweigung der Leitung zum Druckspeicher zwischen Turbine und Stauklappe angeordnet ist.

Es ist jedoch auch möglich, die Stauklappe nach der Abgasturbine anzuordnen und die Abzweigung der Leitung zum Druckspeicher vor der Abgasturbine vorzusehen.

Bringt man die Stauklappe vor der Abgasturbine an, so ist in einer weiteren Ausgestaltung der Erfindung die Abzweigung der Leitung zum Druckspeicher zwischen Auslaßsammler und Stauklappe anzuordnen.

Besonders günstig ist es, wenn die Leitung zum Druckspeicher und/oder der Druckspeicher selbst mit Einrichtungen zur Kühlung des abgezweigten Gases ausgestattet ist.

Im folgenden wird die Erfindung anhand von Zeichnungen näher erläutert. Es zeigen:
- Fig. 1: eine erste Ausführungsvariante der Erfindung in schematischer Darstellung, sowie die
- Fig. 2 bis 3: weitere Ausführungsbeispiele.

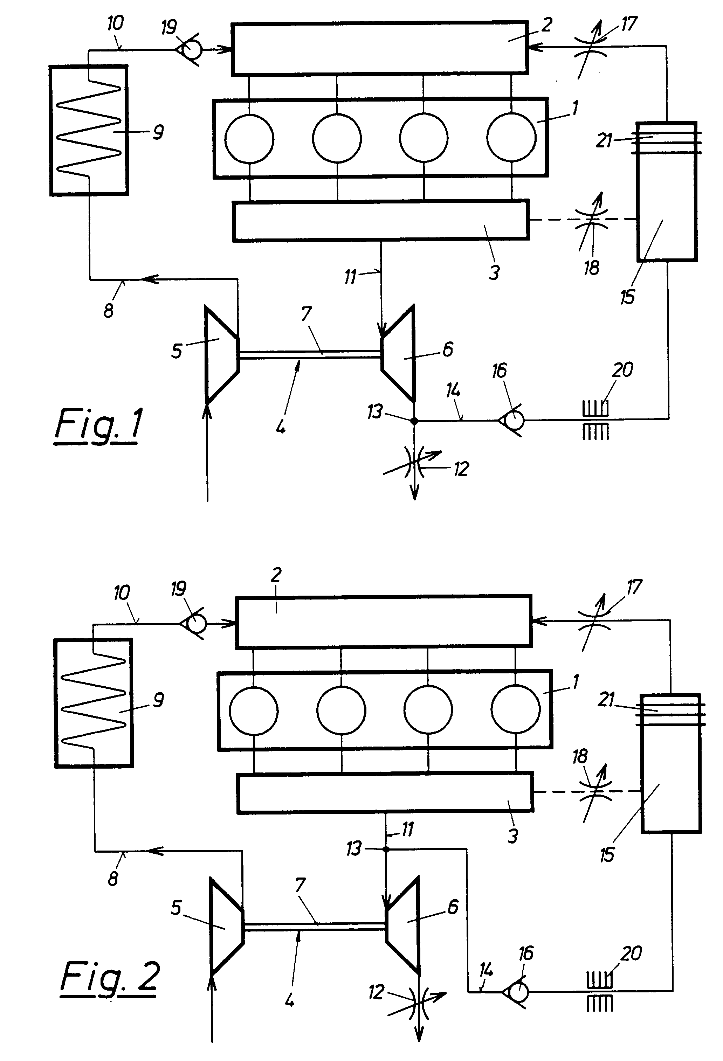

In Fig. 1 ist schematisch eine Brennkraftmaschine 1 mit einem Einlaßsammler 2 und einem Auslaßsammler 3 dargestellt. Ein Abgasturbolader 4 besteht aus einem Verdichter 5 und einer Abgasturbine 6, welche über eine Welle 7 miteinander verbunden sind. Die vom Verdichter 5 komprimierte Ansaugluft gelangt über eine Leitung 8 in den Ladeluftkühler 9 und weiter über eine Leitung 10 in den Einlaßsammler 2. Das Abgas wird aus dem Auslaßsammler 3 über eine Leitung 11 zur Abgasturbine 6 geleitet. Stromabwärts der Abgasturbine 6 ist eine Stauklappe 12 angeordnet, mit der der weiter zum nichtdargestellten Auspuff geleitete Abgasstrom gedrosselt werden kann. Zwischen der Abgasturbine 6 und der Stauklappe 12 befindet sich eine Abzweigung 13, bei der eine Leitung 14 zu einen Druckspeicher 15 abzweigt. Vor dem Druckspeicher 15 ist ein erstes Rückschlagventil 16 angeordnet, das ein Ausströmen des Speichers verhindert, wenn der Druck im Druckspeicher 15 größer ist als der Druck an der Abzweigung 13. Über ein regelbares Ventil 17 ist der Druckspeicher 15 mit dem Einlaßsammler 2 verbunden. In der Anschlußleitung 14 kann anstelle des ersten Rückschlagventils 16 auch ein regelbares Ventil angeordnet sein.

Der Druckspeicher 15 ist über ein steuerbares Ventil 18 mit dem Auslaßsammler 3 verbunden. Zusätzlich zur Aufladung der Brennkraftmaschine kann auch die Rußablagerung im Abgasstrang durch periodisches Öffnen des Ventils 18 ausgeblasen werden, wodurch der konzentrierte Ausstoß großer Rußmengen bei Lastwechsel vermieden wird.

Zwischen dem Verdichter 5 und dem Einlaßsammler 2 kann ein zweites Rückschlagventil 19 angeordnet sein. Besonders günstig ist es, wenn dieses Rückschlagventil 19 in der Leitung 10 zwischen Ladeluftkühler 9 und Einlaßsammler 2 angeordnet ist. Weiters ist im dargestellten Beispiel in der Leitung 14 zum Druckspeicher 15 eine Einrichtung 20 zur Kühlung des abgezweigten Gases vorgesehen. Eine mit Bezugszeichen 21 angedeutete Kühleinrichtung könnte auch im Druckspeicher 15, beispielsweise in Form von Kühlrippen des Druckspeichers, ausgeführt sein.

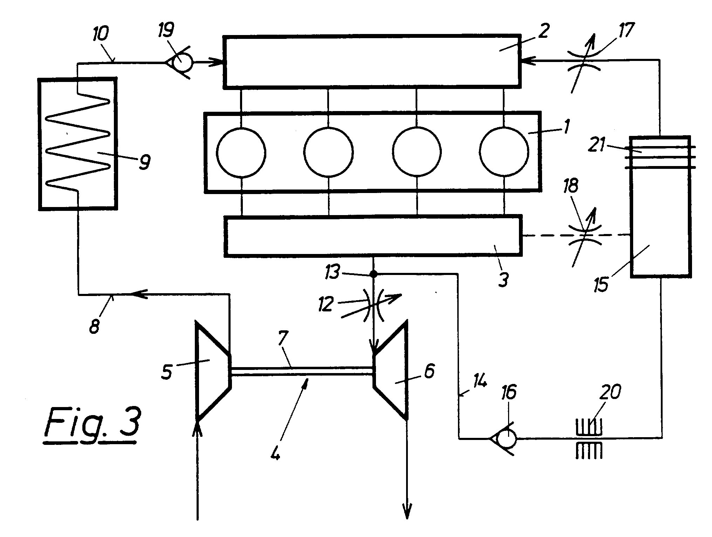

Die Ausführungsvariante nach Fig. 2 unterscheidet sich von jener nach Fig. 1 lediglich dadurch, daß die Abzweigung 13 der Leitung 14 zwischen Auslaßsammler 3 und Abgasturbine 6 liegt. In der Ausführung nach Fig. 3 wird zusätzlich noch die Stauklappe 12 in den Bereich vor die Abgasturbine 6 verlegt.

## Patentansprüche

1. Brennkraftmaschine (1) mit einem Einlaß- und einem Auslaßsystem, einem Abgasturbolader (4), der aus einem Verdichter (5) und einer Abgasturbine (6) besteht, sowie einem Druckspeicher (15), wobei die vom Verdichter (5) komprimierte Ansaugluft über eine erste Leitung (8, 10) in einen Einlaßsammler (2) gelangt und das Abgas aus einem Abgassammler (3) über eine zweite Leitung (11) zur Abgasturbine (6) geleitet wird und wobei im Abbgasstrang eine Stauklappe (12) vorgesehen ist, stromaufwärts von welcher eine Abzweigung (13) einer mit einem Ventil (16) versehenen Anschlußleitung (14) zum Druckspeicher (15) angeordnet ist, **dadurch gekennzeichnet,** daß der Druckspeicher (15) über ein erstes steuerbares Ventil (17) mit dem Einlaßsammler (2) des Einlaßsystems in Verbindung steht und daß der Druckspeicher (15) zusätzlich über ein zweites steuerbares Ventil (18) mit dem Auslaßsammler (3) des Auslaßsystems in Verbindung steht.

2. Brennkraftmaschine nach Anspruch 1, **dadurch gekennzeichnet,** daß das Ventil (16) in der Anschlußleitung (14) als erstes Rückschlagventil ausgeführt ist.

3. Brennkraftmaschine nach Anspruch 1, **dadurch gekennzeichnet,** daß das Ventil (16) in der Anschlußleitung (14) ein aktiv gesteuertes Ventil ist.

4. Brennkraftmaschine nach einem der Ansprüche 1 bis 3, **dadurch gekennzeichnet,** daß zwischen dem Verdichter (5) des Abgasturboladers (4) und dem Einlaßsammler (2) ein zweites Rückschlagventil (19) angeordnet ist.

5. Brennkraftmaschine nach Anspruch 4, **dadurch gekennzeichnet,** daß ein Ladeluftkühler (9) vorgesehen ist, und daß das zweite Rückschlagventil (19) zwischen Ladeluftkühler (9) und Einlaßsammler (2) angeordnet ist.

6. Brennkraftmaschine nach einem der Ansprüche 1 bis 5, **dadurch gekennzeichnet,** daß die Stauklappe (12) nach der Abgasturbine (6) angeordnet ist und daß die Abzweigung (13) der Leitung (14) zum Druckspeicher (15) zwischen Turbine (6) und Stauklappe (12) angeordnet ist.

7. Brennkraftmaschine nach einem der Ansprüche 1 bis 5, **dadurch gekennzeichnet,** daß die Stauklappe (12) nach der Abgasturbine (6) angeordnet ist und daß die Abzweigung (13) der Leitung (14) zum Druckspeicher (15) vor der Abgasturbine (6) angeordnet ist.

8. Brennkraftmaschine nach einem der Ansprüche 1 bis 5, **dadurch gekennzeichnet,** daß die Stauklappe (12) vor der Abgasturbine (6) angeordnet ist und daß die Abzweigung (13) der Leitung (14) zum Druckspeicher (15) zwischen Auslaßsammler (3) und Stauklappe (12) angeordnet ist.

9. Brennkraftmaschine nach einem der Ansprüche 1 bis 8, **dadurch gekennzeichnet,** daß die Leitung (14) zum Druckspeicher (15) und/oder der Druckspeicher (15) selbst mit Einrichtungen (20, 21) zur Kühlung des abgezweigten Gases ausgestattet sind.

## Claims

1. Internal combustion engine (1) with an induction system and an exhaust system, an exhaust gas turbo-charger (4) which comprises a compressor (5) and an exhaust gas turbine (6), as well as a pressure reservoir (15), the induction air compressed by the compressor (5) reaching an induction manifold (2) through a first pipe (8,10) and the exhaust gas being conducted out of an exhaust manifold (3) through a second pipe (11) to the exhaust gas turbine (6), and a throttle valve (12) being provided in the path of the exhaust gas, upstream of which there is arranged a branch (13) of a connecting pipe (14), provided with a valve (16), to the pressure reservoir (15), characterised in that the pressure reservoir (15) is in communication through a first controllable valve (17) with the induction manifold (2) of the induction system and that the pressure reservoir (15) is furthermore in communication through a second controllable valve (18) with the exhaust manifold (3) of the exhaust system.

2. Internal combustion engine according to claim 1 characterised in that the valve (16) in the connecting pipe (14) is in the form of a first non-return valve.

3. Internal combustion engine according to claim 1 characterised in that the valve (16) in the connecting pipe (14) is an actively controlled valve.

4. Internal combustion engine according to one of claims 1 to 3 characterised in that a second non-return valve (19) is arranged between the compressor (5) of the exhaust gas turbo-charger (4) and the induction manifold (2).

5. Internal combustion engine according to claim 4 characterised in that a charge cooler (9) is provided, and that the second non-return valve (19) is arranged between charge cooler (9) and induction manifold (2).

6. Internal combustion engine according to one of claims 1 to 5 characterised in that the throttle valve (12) is arranged following the exhaust gas turbine (6) and that the branch (13) of the pipe (14) to the pressure reservoir (15) is arranged between turbine (6) and throttle valve (12).

7. Internal combustion engine according to one of claims 1 to 5 characterised in that the throttle valve (12) is arranged following the exhaust gas turbine (6) and that the branch (13) of the pipe (14) to the pressure reservoir (15) is arranged ahead of the exhaust gas turbine (6).

8. Internal combustion engine according to one of claims 1 to 5 characterised in that the throttle valve (12) is arranged ahead of the exhaust gas turbine (6) and that the branch (13) for the pipe (14) to the pressure reservoir (15) is arranged between exhaust manifold (3) and throttle valve (12).

9. Internal combustion engine according to one of claims 1 to 8 characterised in that the pipe (14) leading to the pressure reservoir (15) and/or the pressure reservoir (15) itself are provided with means (20,21) for cooling the bled-off gas.

## Revendications

1. Moteur à combustion interne (1) comportant un système d'admission et un système d'échappement, un turbocompresseur (4) pour les gaz d'échappement, comprenant un compresseur (5) et une turbine (6) traversée par les gaz d'échappement ainsi qu'un accumulateur de pression (15), l'air d'aspiration, comprimé par le compresseur (5), arrivant par une première conduite (8, 10) dans un collecteur d'admission (2) et les gaz d'échappement étant transmis par un collecteur de gaz d'échappement (3) à travers une seconde conduite (11) vers la turbine de gaz d'échappement (6), la tubulure des gaz d'échappement comportant un clapet de retenue (12) et en amont de celui-ci, une dérivation (13) d'une conduite (14) munie d'un clapet (16) est reliée à l'accumulateur de pression (15),
caractérisé en ce que
l'accumulateur de pression (15) est relié par l'intermédiaire d'une première vanne commandée (17) au collecteur d'admission (2) du système d'admission et l'accumulateur de pression (15) communique en outre par une seconde vanne commandée (18) avec le collecteur d'échappement (3) du système d'échappement.

2. Moteur à combustion interne selon la revendication 1,
caractérisé en ce que
le clapet (16) de la conduite de branchement (14) est réalisé sous la forme d'un premier clapet anti-retour.

3. Moteur à combustion interne selon la revendication 1,
caractérisé en ce que
le clapet (16) de la conduite de raccordement (14) est une vanne à commande active.

4. Moteur à combustion interne selon l'une des revendications 1 à 3,
caractérisé par
un second clapet d'arrêt (19) est disposé entre le compresseur (5) du turbocompresseur à gaz d'échappement (4) et le collecteur d'admission (2).

5. Moteur à combustion interne selon la revendication 4,
caractérisé par
un radiateur de refroidissement pour l'air de suralimentation (9) et le second clapet anti-retour (19) est prévu entre le radiateur pour l'air de suralimentation (9) et le collecteur d'admission (2).

6. Moteur à combustion interne selon l'une des revendications 1 à 5,
caractérisé en ce que
le clapet de retenue (12) est prévu en aval de la turbine de gaz (6) et la dérivation (13) de la conduite (14) vers l'accumulateur de pression (15) se trouve entre la turbine (6) et le clapet de retenue (12).

7. Moteur à combustion interne selon l'une quelconque des revendications 1 à 5,
caractérisé en ce que
le clapet de retenue (12) est en aval de la turbine à gaz (6) et la dérivation (13) de la conduite (14) vers l'accumulateur de pression (15) se trouve en amont de la turbine à gaz (6).

8. Moteur à combustion interne selon l'une quelconque des revendications 1 à 5,
caractérisé en ce que
le clapet de retenue (12) se trouve en amont de la turbine à gaz (6) et la dérivation (13) de la conduite (14) vers l'accumulateur de pression (15) se trouve entre le collecteur d'échappement (3) et le clapet de retenue (12).

9. Moteur à combustion interne selon l'une des revendications 1 à 8,
caractérisé en ce que
la conduite (14) vers l'accumulateur de pression (15) et/ou l'accumulateur de pression (15) lui-même sont munis d'installations (20, 21) pour refroidir le gaz dérivé.
